# EUROPÄISCHE PATENTANMELDUNG

(11) **EP 1 717 559 A2**
(43) Veröffentlichungstag der Anmeldung: **02.11.2006**
(21) Anmeldenummer: 06111007.8
(22) Anmeldetag: 13.03.2006
(51) Int. Cl.: G01C 21/36

(54) **Vorrichtung zum Navigieren eines Fahrzeugs und Server-System**

(30) Priorität: 27.04.2005 DE 102005019591
(71) Anmelder: SIEMENS AKTIENGESELLSCHAFT, 80333 München (DE)
(72) Erfinder: Belhoula, Abdelkarim, Asslar 35614 (DE); Zander, Marko, Asslar 35614 (DE)

(57) **Zusammenfassung**

Eine Vorrichtung ist ausgebildet zum Navigieren eines Fahrzeugs zu einem vorgebbaren Ziel. Die Vorrichtung ist so ausgebildet, dass das vorgebbare ziel mittels einer ersten Adressrepräsentation eines geographischen Ortes vorgebbar ist. Die Vorrichtung umfasst mindestens eine Schnittstelleneinheit (IU), der eingangsseitig die erste Adressrepräsentation zuführbar ist. Die Vorrichtung umfasst mindestens eine Adresserkennungseinheit, die ausgebildet ist, eine zweite Adressrepräsentation aus der ersten Adressrepräsentation zu ermitteln. Die Vorrichtung umfasst ferner eine Adressübersetzungseinheit (ATrans), die ausgebildet ist, die zweite Adressrepräsentation in eine geographische Koordinatenrepräsentation zu übersetzen. Die Vorrichtung umfasst ferner eine Navigationseinheit (Nav), die ausgebildet ist, abhängig von der geographischen Koordinatenrepräsentation eine Zielführung zu dem vorgegebenen Ziel durchzuführen.

## Beschreibung

Die Erfindung betrifft eine Vorrichtung, die ausgebildet ist zum Navigieren eines Fahrzeugs zu einem vorgebbaren Ziel, und ein Server-System.

Vorrichtungen zum Navigieren eines Fahrzeugs erfordern von einem Benutzer der Vorrichtung eine separate Eingabe von Adresskomponenten, die zusammen einen geographischen Ort eindeutig bezeichnen. Die Adresskomponenten sind z.B. ein Ortsname oder ein Straßenname. Nach Eingabe der ersten Buchstaben wird dem Benutzer jeweils eine Auswahlliste mit zu den eingegebenen Buchstaben passenden Adresskomponenten angeboten, aus der dieser die jeweils gewünschte, eindeutige Adresskomponente auswählen kann. Die Adresskomponenten bilden zusammen eine Zielvorgabe für das Navigieren. Eine solche separate Eingabe der Adresskomponenten ist jedoch zeitaufwändig.

Die Aufgabe der Erfindung ist, eine Vorrichtung und ein Server-System zum Navigieren eines Fahrzeugs zu schaffen, bei der bzw. bei dem ein Ziel einfach vorgebbar ist.

Die Aufgabe wird gelöst durch die Merkmale der unabhängigen Patentansprüche. Vorteilhafte Weiterbildungen der Erfindung sind in den Unteransprüchen gekennzeichnet.

Gemäß eines ersten Aspekts zeichnet sich die Erfindung aus durch eine Vorrichtung, die ausgebildet ist zum Navigieren eines Fahrzeugs zu einem vorgebbaren Ziel. Die Vorrichtung ist so ausgebildet, dass das vorgebbare Ziel mittels einer ersten Adressrepräsentation eines geographischen Ortes vorgebbar ist. Die Vorrichtung umfasst mindestens eine Schnittstelleneinheit, der eingangsseitig die erste Adressrepräsentation zuführbar ist. Die Vorrichtung umfasst mindestens eine Adresserkennungseinheit, die ausgebildet ist, eine zweite Adressrepräsentation aus der ersten Adressrepräsentation zu ermitteln. Die Vorrichtung umfasst ferner eine Adressübersetzungseinheit, die ausgebildet ist, die zweite Adressrepräsentation in eine geographische Koordinatenrepräsentation zu übersetzen. Die Vorrichtung umfasst ferner eine Navigationseinheit, die ausgebildet ist, abhängig von der geographischen Koordinatenrepräsentation eine Zielführung zu dem vorgegebenen Ziel durchzuführen.

Die Erfindung beruht auf der Erkenntnis, dass Benutzer der Vorrichtung zum Navigieren des Fahrzeugs üblicherweise über eine Vielzahl von Adressen verfügen, die ein potenzielles Ziel für das Navigieren darstellen. Diese Adressen liegen jedoch in verschiedenen Repräsentationen oder an verschiedenen Orten vor, z.B. in einem Mobiltelefon, in einem persönlichen digitalen Assistenten, auf einer Visitenkarte, als ein Notizbucheintrag, als ein Kartenausschnitt eines Stadtplans oder als ein Foto des geographischen Ortes. Derartige Repräsentationen von Adressen bilden die erste Adressrepräsentation, die einen geographischen Ort bezeichnen oder darstellen.

Das Navigieren erfolgt anhand eines mathematischen Bezugssystems, das durch ein Koordinatensystem gebildet ist. Die erste Adressrepräsentation wird deshalb in die geographische Koordinatenrepräsentation übersetzt, die eine Lage des geographischen Ortes in Bezug auf das Koordinatensystem eindeutig vorgibt. Die Zielführung zu dem vorgegebenen Ziel kann erfolgen durch optische oder akustische Signale oder durch eine graphische Präsentation von Weginformationen oder eines Kartenausschnitts oder durch andere geeignete Maßnahmen, um einem Fahrer des Fahrzeugs Hinweise oder Fahranweisungen mitzuteilen, die es dem Fahrer gestatten, abhängig von diesen den Weg zu dem vorgegebenen Ziel zu finden. Die Zielführung kann auch ein Ermitteln einer geeigneten Route zu dem vorgegebenen Ziel umfassen, z.B. von einer aktuellen Position aus.

Der Vorteil ist, dass das Vorgeben des Ziels sehr einfach durch Zuführen der ersten Adressrepräsentation möglich ist. Insbesondere kann der Benutzer bereits vorhandene Adressen bzw. Adressrepräsentationen zum Vorgeben des Ziels nutzen, ohne die jeweilige Adresse oder deren Adresskomponenten erneut eingeben zu müssen. Abhängig von einer Ausgestaltung der Schnittstelleneinheit ist die erste Adressrepräsentation mittels unterschiedlicher Medien zuführbar.

Ein weiterer Vorteil ist, dass abhängig von einer Ausgestaltung der mindestens einen Adresserkennungseinheit der geographische Ort durch die erste Adressrepräsentation jeweils auf unterschiedliche Art repräsentiert sein kann, z.B. als gesprochene Adresse, als geschriebene Adresse oder als ein Foto des geographischen Ortes. Jede Adresserkennungseinheit ist beispielsweise ausgebildet, jeweils für eine Art der Repräsentation des geographischen Ortes die zweite Adressrepräsentation aus der ersten Adressrepräsentation zu ermitteln.

Gemäß eines zweiten Aspekts zeichnet sich die Erfindung aus durch eine Vorrichtung, die ausgebildet ist zum Navigieren eines Fahrzeugs zu einem vorgebbaren Ziel. Die Vorrichtung ist so ausgebildet, dass das vorgebbare Ziel mittels einer ersten Adressrepräsentation eines geographischen Ortes vorgebbar ist. Die Vorrichtung umfasst mindestens eine Schnittstelleneinheit, der eingangsseitig die erste Adressrepräsentation zuführbar ist. Die Vorrichtung umfasst mindestens eine Adresserkennungseinheit, die ausgebildet ist, eine zweite Adressrepräsentation aus der ersten Adressrepräsentation zu ermitteln. Die Vorrichtung umfasst ferner eine erste Sende-Empfangseinheit, die ausgebildet ist, die zweite Adressrepräsentation an ein Server-System zu senden und von diesem eine geographische Koordinatenrepräsentation des geographischen Ortes oder eine Route zu dem vorgegebenen Ziel oder entsprechende Fahranweisungen zu empfangen. Die Vorrichtung umfasst ferner eine Navigationseinheit, die ausgebildet ist, abhängig von der geographischen Koordinatenrepräsentation, der Route bzw. den Fahranweisungen eine Zielführung zu dem vorgegebenen Ziel durchzuführen.

Der Vorteil ist, dass das Vorgeben des Ziels sehr einfach durch Zuführen der ersten Adressrepräsentation möglich ist. Insbesondere kann der Benutzer bereits vorhandene Adressen bzw. Adressrepräsentationen zum Vorgeben des Ziels nutzen, ohne die jeweilige Adresse oder deren Adresskomponenten erneut eingeben zu müssen. Abhängig von einer Ausgestaltung der Schnittstelleneinheit ist die erste Adressrepräsentation mittels unterschiedlicher Medien zuführbar.

Ein weiterer Vorteil ist, dass abhängig von einer Ausgestaltung der mindestens einen Adresserkennungseinheit der geographische Ort durch die erste Adressrepräsentation jeweils auf unterschiedliche Art repräsentiert sein kann, z.B. als gesprochene Adresse, als geschriebene Adresse oder als ein Foto des geographischen Ortes. Jede Adresserkennungseinheit ist beispielsweise ausgebildet, jeweils für eine Art der Repräsentation des geographischen Ortes die zweite Adressrepräsentation aus der ersten Adressrepräsentation zu ermitteln.

Der Vorteil ist ferner, dass die Vorrichtung einfach ausgebildet sein kann, da das Übersetzen der zweiten Adressrepräsentation in die geographische Koordinatenrepräsentation und gegebenenfalls das Ermitteln der Route oder der Fahranweisungen durch das Server-System ausgeführt werden kann. Fahranweisungen können Anweisungen an den Fahrer des Fahrzeugs umfassen, die es dem Fahrer ermöglichen, das Fahrzeug zu dem vorgegebenen Ziel zu fahren. Fahranweisungen können jedoch auch Steuer- oder Stellsignale umfassen, die ein automatisches Steuern des Fahrzeugs zu dem vorgegebenen Ziel ermöglichen.

In einer vorteilhaften Ausgestaltung der Vorrichtung ist die erste Adressrepräsentation eine gesprochene Adresse. Die mindestens eine Adresserkennungseinheit ist ausgebildet zum Erkennen von Sprache. Der Vorteil ist, dass der Vorrichtung durch das Sprechen der Adresse die erste Adressrepräsentation sehr einfach zuführbar ist.

In einer weiteren vorteilhaften Ausgestaltung der Vorrichtung ist die erste Adressrepräsentation ein Bild einer geschriebenen Adresse. Die mindestens eine Adresserkennungseinheit ist ausgebildet zum Erkennen von Schrift. Der Vorteil ist, dass das Bild als erste Adressrepräsentation sehr einfach durch Digitalisieren, z.B. durch Einscannen einer Visitenkarte, oder durch Fotografieren erzeugt werden kann.

In einer weiteren vorteilhaften Ausgestaltung der Vorrichtung ist die erste Adressrepräsentation ein Bild des geographischen Ortes. Die mindestens eine Adresserkennungseinheit ist ausgebildet zum Erkennen des in dem Bild dargestellten geographischen Ortes. Der Vorteil ist, dass das Bild als erste Adressrepräsentation sehr einfach durch Digitalisieren, z.B. durch Einscannen einer Broschüre oder durch Fotografieren, erzeugt werden kann.

Gemäß eines dritten Aspekts zeichnet sich die Erfindung aus durch eine Vorrichtung, die ausgebildet ist zum Navigieren eines Fahrzeugs zu einem vorgebbaren Ziel. Die Vorrichtung ist so ausgebildet, dass das vorgebbare Ziel mittels einer ersten Adressrepräsentation eines geographischen Ortes vorgebbar ist. Die Vorrichtung umfasst mindestens eine Schnittstelleneinheit, der eingangsseitig die erste Adressrepräsentation zuführbar ist. Die Vorrichtung umfasst eine erste Sende-Empfangseinheit, die ausgebildet ist, die erste Adressrepräsentation an ein Server-System zu senden und von diesem eine zweite Adressrepräsentation zu empfangen. Die Vorrichtung umfasst ferner eine Adressübersetzungseinheit, die ausgebildet ist, die zweite Adressrepräsentation in eine geographische Koordinatenrepräsentation zu übersetzen. Die Vorrichtung umfasst ferner eine Navigationseinheit, die ausgebildet ist, abhängig von der geographischen Koordinatenrepräsentation eine Zielführung zu dem vorgegebenen Ziel durchzuführen.

Der Vorteil ist, dass das Vorgeben des Ziels sehr einfach durch Zuführen der ersten Adressrepräsentation möglich ist. Insbesondere kann der Benutzer bereits vorhandene Adressen bzw. Adressrepräsentationen zum Vorgeben des Ziels nutzen, ohne die jeweilige Adresse oder deren Adresskomponenten erneut eingeben zu müssen. Abhängig von einer Ausgestaltung der Schnittstelleneinheit ist die erste Adressrepräsentation mittels unterschiedlicher Medien zuführbar.

Ein weiterer Vorteil ist, dass die Vorrichtung einfach ausgebildet sein kann, da ein Erkennen einer Adresse in der ersten Adressrepräsentation durch das Server-System ausgeführt werden kann.

In einer weiteren vorteilhaften Ausgestaltung der Vorrichtung ist die mindestens eine Adresserkennungseinheit oder die Adressübersetzungseinheit ausgebildet zum Ermitteln von Adresskomponenten der ersten bzw. der zweiten Adressrepräsentation und zum Erkennen und/oder zum Korrigieren von Fehlern der Adresskomponenten. Adresskomponenten sind beispielsweise ein Ortsname, ein Straßenname oder auch ein Name einer U-Bahn-Haltestelle oder eines Hotels oder der Name einer Messe. Der Vorteil ist, dass der Benutzer die Adresskomponenten nicht als solche vorgeben oder separat zuführen muss, sondern dass die Adresskomponenten kontextbezogen aus der ersten oder der zweiten Adressrepräsentation ermittelt werden. Ferner können typische Schreibfehler gegebenenfalls automatisch korrigiert werden, so dass der Benutzer nicht korrigierend eingreifen muss. Dadurch ist das Vorgeben des Ziels für das Navigieren des Fahrzeugs besonders einfach.

In diesem Zusammenhang ist es vorteilhaft, wenn die mindestens eine Adresserkennungseinheit oder die Adressübersetzungseinheit ausgebildet ist zum Überprüfen auf Eindeutigkeit der Adresskomponenten und zum Bereitstellen mindestens einer Auswahlliste von ähnlichen, jeweils eindeutigen Adresskomponenten, aus der für den Benutzer eine gewünschte Adresskomponente auswählbar ist, wenn die jeweilige Adresskomponente nicht eindeutig ist. Der Vorteil ist, dass der Benutzer nur dann auswählen muss, wenn eine Adresskomponente, insbesondere auch in Zusammenhang mit weiteren Adresskomponenten, mehrdeutig ist. Dadurch ist der Aufwand, der Vorrichtung das Ziel vorzugeben, gering.

Gemäß eines vierten Aspekts zeichnet sich die Erfindung aus durch eine Vorrichtung, die ausgebildet ist zum Navigieren eines Fahrzeugs zu einem vorgebbaren Ziel. Die Vorrichtung ist so ausgebildet, dass das vorgebbare Ziel mittels einer ersten Adressrepräsentation eines geographischen Ortes vorgebbar ist. Die Vorrichtung umfasst mindestens eine Schnittstelleneinheit, der eingangsseitig die erste Adressrepräsentation zuführbar ist. Die Vorrichtung umfasst eine erste Sende-Empfangseinheit, die ausgebildet ist, die erste Adressrepräsentation an ein Server-System zu senden und von diesem eine geographische Koordinatenrepräsentation des geographischen Ortes oder eine Route zu dem vorgegebenen Ziel oder entsprechende Fahranweisungen zu empfangen. Die Vorrichtung umfasst ferner eine Navigationseinheit, die ausgebildet ist, abhängig von der geographischen Koordinatenrepräsentation, der Route bzw. den Fahranweisungen eine Zielführung zu dem vorgegebenen Ziel durchzuführen.

Der Vorteil ist, dass das Vorgeben des Ziels sehr einfach durch Zuführen der ersten Adressrepräsentation möglich ist. Insbesondere kann der Benutzer bereits vorhandene Adressen bzw. Adressrepräsentationen zum Vorgeben des Ziels nutzen, ohne die jeweilige Adresse oder deren Adresskomponenten erneut eingeben zu müssen. Abhängig von einer Ausgestaltung der Schnittstelleneinheit ist die erste Adressrepräsentation mittels unterschiedlicher Medien zuführbar.

Ein weiterer Vorteil ist, dass die Vorrichtung besonders einfach ausgebildet sein kann, da das Erkennen der Adresse in der ersten Adressrepräsentation und das Übersetzen in die geographische Koordinatenrepräsentation und gegebenenfalls das Ermitteln der Route oder der Fahranweisungen durch das Server-System ausgeführt werden kann.

In einer weiteren vorteilhaften Ausgestaltung der Vorrichtung ist die erste Adressrepräsentation und/oder die zweite Adressrepräsentation ein Text. Dies hat den Vorteil, dass ein Text, insbesondere ein alphanumerischer Text, eine sehr einfache Darstellung und Weiterverarbeitung der Adresse ermöglicht. Insbesondere sind Adresserkennungseinheiten bekannt, die Sprache oder Schrift erkennen und in einen Text umwandeln können. Ferner ist beispielsweise mit VCARD ein textbasiertes Datenformat bekannt, das geeignet ist, Adressen zu repräsentieren und die erste oder die zweite Adressrepräsentation zu bilden.

In einer weiteren vorteilhaften Ausgestaltung umfasst die Vorrichtung mindestens eine interne Datenbank oder ist die Vorrichtung mit mindestens einer externen Datenbank koppelbar. Die Vorrichtung ist ausgebildet, die zweite Adressrepräsentation und/oder die geographische Koordinatenrepräsentation mittels Anfragen an die mindestens eine interne Datenbank und/oder an die mindestens eine externe Datenbank zu ermitteln. Der Vorteil ist, dass so die geographische Koordinatenrepräsentation zu einer sehr großen Anzahl von möglichen Adressen ermittelt werden kann. Die Datenbanken, insbesondere die externe Datenbank, können einfach erweiterbar oder aktualisierbar sein, so dass die geographische Koordinatenrepräsentation z.B. auch für neue Adressen ermittelbar ist, die z.B. zum Zeitpunkt der Herstellung der Vorrichtung noch nicht verfügbar waren. Die interne Datenbank kann z.B. auch ein elektronisches Adressbuch sein, in dem der Benutzer geographische Orte, die für den Benutzer von Bedeutung sind, speichern kann.

In diesem Zusammenhang ist es vorteilhaft, wenn die Vorrichtung eine Positionsermittlungseinheit umfasst zum Ermitteln einer aktuellen Position. Die aktuelle Position ist als Koordinatenrepräsentation in der internen Datenbank und/oder in der externen Datenbank speicherbar zusammen mit einer Adresse oder einer Bezeichnung des zugehörigen geographischen Ortes. Dies hat den Vorteil, dass der Benutzer individuell geographische Orte speichern kann oder als Ziel für das Navigieren vorgeben kann, auch wenn dem jeweiligen geographischen Ort an der aktuellen Position bislang keine Adresse zugeordnet ist, die in der internen oder in der externen Datenbank gespeichert ist. Die interne Datenbank, insbesondere das Adressbuch, und gegebenenfalls die externe Datenbank sind so sehr einfach erweiterbar.

Gemäß eines fünften Aspekts zeichnet sich die Erfindung aus durch ein Server-System, das eine zweite Sende-Empfangseinheit, mindestens eine Adresserkennungseinheit und eine Adressübersetzungseinheit umfasst. Die zweite Sende-Empfangseinheit ist ausgebildet, eine erste Adressrepräsentation zu empfangen. Die mindestens eine Adresserkennungseinheit ist ausgebildet, eine zweite Adressrepräsentation aus der ersten Adressrepräsentation zu ermitteln. Die Adressübersetzungseinheit ist ausgebildet, die zweite Adressrepräsentation in eine geographische Koordinatenrepräsentation zu übersetzen oder eine Route zu dem vorgegebenen Ziel oder entsprechende Fahranweisungen zu ermitteln. Das Server-System ist ausgebildet, die geographische Koordinatenrepräsentation, die Route bzw. die Fahranweisungen über die zweite Sende-Empfangseinheit zu senden.

Der Vorteil ist, dass dem Server-System sehr einfach mehr Ressourcen zugeordnet werden kann als der Vorrichtung zum Navigieren des Fahrzeugs. Insbesondere kann das Server-System als Zentrale ausgebildet sein und so ausgebildet sein, dass das Server-System für mehrere Vorrichtungen unabhängig voneinander und gegebenenfalls gleichzeitig nutzbar ist. Ferner kann das Server-System einfach erweiterbar oder aktualisierbar ausgebildet sein oder mindestens eine Datenbank umfassen oder mit mindestens einer Datenbank koppelbar sein, um aktuelle Informationen berücksichtigen zu können, z.B. Verkehrs- oder Routen-Informationen oder aktuelle Ereignisse, wie z.B. Messen, Konzert- oder Sportveranstaltungen.

Gemäß eines sechsten Aspekts zeichnet sich die Erfindung aus durch ein Server-System, das eine zweite Sende-Empfangseinheit und mindestens eine Adresserkennungseinheit umfasst. Die zweite Sende-Empfangseinheit ist ausgebildet, eine erste Adressrepräsentation zu empfangen. Die mindestens eine Adresserkennungseinheit ist ausgebildet, eine zweite Adressrepräsentation aus der ersten Adressrepräsentation zu ermitteln. Das Server-System ist ausgebildet, die zweite Adressrepräsentation über die zweite Sende-Empfangseinheit zu senden.

Der Vorteil ist, dass dem Server-System sehr einfach mehr Ressourcen zugeordnet werden können als der Vorrichtung zum Navigieren des Fahrzeugs. Insbesondere kann das Server-System als Zentrale ausgebildet sein und so ausgebildet sein, dass das Server-System für mehrere Vorrichtungen unabhängig voneinander und gegebenenfalls gleichzeitig nutzbar ist. Ferner kann das Server-System einfach erweiterbar oder aktualisierbar ausgebildet sein oder mindestens eine Datenbank umfassen oder mit mindestens einer Datenbank koppelbar sein.

In einer vorteilhaften Ausgestaltung des Server-Systems ist die erste Adressrepräsentation eine gesprochene Adresse und ist die mindestens eine Adresserkennungseinheit ausgebildet zum Erkennen von Sprache. Der Vorteil ist, dass die gesprochene Adresse sehr einfach an das Server-System übertragbar ist, z.B. als eine Audio-Datei oder als ein Audio-Datenstrom.

In einer weiteren vorteilhaften Ausgestaltung des Server-Systems ist die erste Adressrepräsentation ein Bild einer geschriebenen Adresse und ist die mindestens eine Adresserkennungseinheit ausgebildet zum Erkennen von Schrift. Der Vorteil ist, dass das Bild sehr einfach an das Server-System übertragbar ist, z.B. als eine Bild-Datei.

In einer weiteren vorteilhaften Ausgestaltung des Server-Systems ist die erste Adressrepräsentation ein Bild eines geographischen Ortes und ist die mindestens eine Adresserkennungseinheit ausgebildet zum Erkennen des in dem Bild dargestellten geographischen Ortes. Der Vorteil ist, dass das Bild sehr einfach an das Server-System übertragbar ist, z.B. als Bild-Datei.

In einer weiteren vorteilhaften Ausgestaltung des Server-Systems ist die mindestens eine Adresserkennungseinheit oder die Adressübersetzungseinheit ausgebildet zum Ermitteln von Adresskomponenten der ersten bzw. der zweiten Adressrepräsentation und zum Erkennen und/oder zum Korrigieren von Fehlern der Adresskomponenten. Der Vorteil ist, dass der Benutzer an einer geeigneten Vorrichtung die Adresskomponenten nicht als solche vorgeben oder separat zuführen muss, sondern dass die Adresskomponenten kontextbezogen aus der ersten oder der zweiten Adressrepräsentation ermittelt werden. Ferner können typische Schreibfehler gegebenenfalls automatisch korrigiert werden, so dass der Benutzer nicht korrigierend eingreifen muss. Dadurch ist das Vorgeben des Ziels für das Navigieren des Fahrzeugs an der Vorrichtung besonders einfach.

In diesem Zusammenhang ist es vorteilhaft, wenn die mindestens eine Adresserkennungseinheit oder die Adressübersetzungseinheit ausgebildet ist zum Überprüfen auf Eindeutigkeit der Adresskomponenten und zum Bereitstellen mindestens einer Auswahlliste von ähnlichen, jeweils eindeutigen Adresskomponenten, aus der für einen Benutzer eine gewünschte Adresskomponente auswählbar ist, wenn die jeweilige Adresskomponente nicht eindeutig ist. Der Vorteil ist, dass der Benutzer an der geeigneten Vorrichtung nur dann auswählen muss, wenn eine Adresskomponente, insbesondere auch in Zusammenhang mit weiteren Adresskomponenten, mehrdeutig ist. Die mindestens eine Auswahlliste kann dem Benutzer über die zweite Sende-Empfangseinheit einfach an der Vorrichtung bereitgestellt werden. Dadurch ist der Aufwand, der Vorrichtung das Ziel vorzugeben, gering.

In einer weiteren vorteilhaften Ausgestaltung des Server-Systems ist die erste Adressrepräsentation und/oder die zweite Adressrepräsentation ein Text. Dies hat den Vorteil, dass ein Text, insbesondere ein alphanumerischer Text, eine sehr einfache Darstellung und Weiterverarbeitung der Adresse ermöglicht. Insbesondere sind Adresserkennungseinheiten bekannt, die Sprache oder Schrift erkennen und in einen Text umwandeln können. Ferner ist beispielsweise mit VCARD ein textbasiertes Datenformat bekannt, das geeignet ist, Adressen zu repräsentieren und die erste oder die zweite Adressrepräsentation zu bilden.

Ausführungsbeispiele der Erfindung sind im Folgenden anhand der schematischen Zeichnungen erläutert.

### Es zeigen:

Figur 1 eine Vorrichtung zum Navigieren eines Fahrzeugs,
Figur 2 eine weitere Vorrichtung zum Navigieren eines Fahrzeugs,
Figur 3 ein Server-System,
Figur 4 ein erstes Ablaufdiagramm,
Figur 5 ein zweites Ablaufdiagramm und
Figur 6 ein drittes Ablaufdiagramm.

Elemente gleicher Konstruktion oder Funktion sind figurenübergreifend mit den gleichen Bezugszeichen versehen.

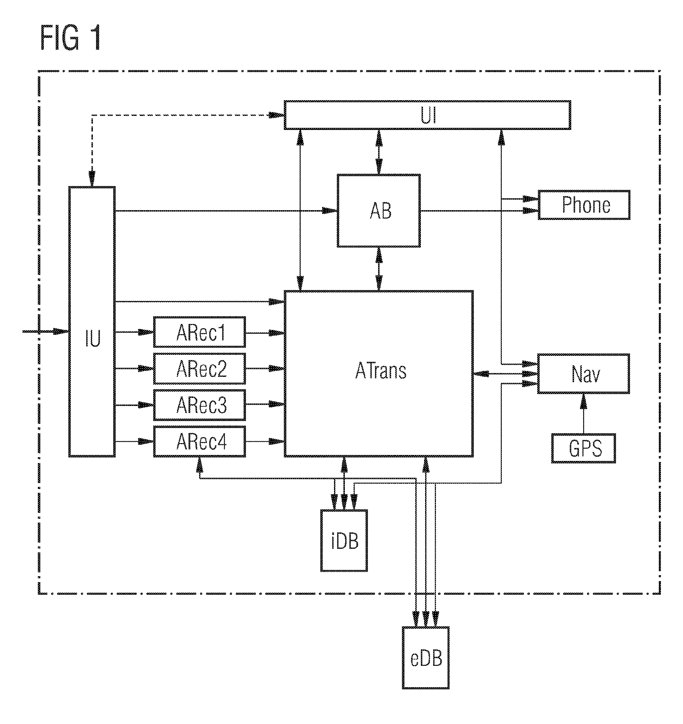

Eine Vorrichtung zum Navigieren eines Fahrzeugs, die vorzugsweise in dem Fahrzeug angeordnet ist, umfasst eine Schnittstelleneinheit IU, eine Adressübersetzungseinheit ATrans und eine Navigationseinheit Nav (Figur 1). Die Adressübersetzungseinheit ATrans ist eingangsseitig gekoppelt mit der Schnittstelleneinheit IU und ist ausgangsseitig gekoppelt mit der Navigationseinheit Nav.

Die Vorrichtung umfasst eine erste Adresserkennungseinheit ARec1, eine zweite Adresserkennungseinheit ARec2, eine dritte Adresserkennungseinheit ARec3 und eine vierte Adresserkennungseinheit ARec4. Es können jedoch auch weniger oder mehr Adresserkennungseinheiten vorgesehen sein. Die erste Adresserkennungseinheit ARec1, die zweite Adresserkennungseinheit ARec2, die dritte Adresserkennungseinheit ARec3 und die vierte Adresserkennungseinheit ARec4 sind eingangsseitig mit der Schnittstelleneinheit IU gekoppelt und sind ausgangsseitig mit der Adressübersetzungseinheit ATrans gekoppelt.

Ferner sind ein elektronisches Adressbuch AB und eine Benutzerschnittstelle UI vorgesehen. Das Adressbuch AB ist mit der Schnittstelleneinheit IU, der Adressübersetzungseinheit ATrans und mit der Benutzerschnittstelle UI gekoppelt. Die Vorrichtung kann ferner auch eine Telefoneinheit Phone umfassen, die mit dem Adressbuch AB und der Benutzerschnittstelle UI gekoppelt ist.

Die Navigationseinheit Nav ist ferner mit einer Positionsermittlungseinheit GPS gekoppelt, die ausgebildet ist, eine aktuelle Position des Fahrzeugs zu ermitteln. In der Vorrichtung ist ferner eine interne Datenbank iDB vorgesehen, die mit der Adressübersetzungseinheit ATrans, der Navigationseinheit Nav und gegebenenfalls mit der vierten Adresserkennungseinheit ARec4 gekoppelt ist. Ferner ist die Adressübersetzungseinheit ATrans und gegebenenfalls auch die Navigationseinheit Nav oder die vierte Adresserkennungseinheit ARec4 koppelbar mit einer externen Datenbank eDB. Es können auch mehrere interne Datenbanken iDB und/oder externe Datenbanken eDB vorgesehen sein. Insbesondere kann auch das Adressbuch AB als interne Datenbank iDB oder als externe Datenbank eDB ausgebildet sein.

Der Schnittstelleneinheit IU ist eine erste Adressrepräsentation zuführbar. Die erste Adressrepräsentation bezeichnet einen geographischen Ort, der z.B. als Stadt, als Straße und/oder als ein Gebäude gegeben ist, oder stellt diesen dar. Die erste Adressrepräsentation ist vorzugsweise eine kompakte digitale Repräsentation des geographischen Ortes oder einer Adresse, die dem geographischen Ort zugeordnet ist, z.B. in der Form einer Datei oder eines Datenstroms. "Kompakt" heißt in diesem Zusammenhang, dass z.B. die Adresse in der ersten Adressrepräsentation zusammenhängend repräsentiert ist und so zusammenhängend der Schnittstelleneinheit IU zuführbar ist. Im Gegensatz dazu erfordern bekannte Vorrichtungen zum Navigieren eines Fahrzeugs ein separates Zuführen von Adresskomponenten, wie z.B. eines Straßennamens oder eines Ortsnamens, die ein Benutzer der Vorrichtung per Hand eingeben oder auswählen muss.

Die erste Adressrepräsentation ist der Schnittstelleneinheit IU z.B. als ein Bild oder als ein Text zuführbar. Die erste Adressrepräsentation kann der Schnittstelleneinheit IU beispielsweise mittels drahtloser Datenübertragung, z.B. mittels Bluetooth, Infrarot oder Wireless Local Area Network, oder drahtgebundener Datenübertragung, z.B. mittels Universal Serial Bus, zugeführt werden, z.B. von einem Mobiltelefon oder von einem persönlichen digitalen Assistenten, der auch als PDA bezeichnet werden kann, oder mittels Speichermedien, wie z.B. Compact Disks, Digital Versatile Disks oder Flash-Speichermedien. Ferner kann die Schnittstelleneinheit IU auch z.B. mit einem Mikrofon und einem Analog/Digital-Wandler gekoppelt sein. Die erste Adressrepräsentation kann dann beispielsweise eine gesprochene Adresse sein, die von dem Benutzer in das Mikrofon gesprochen werden kann.

Die Adressübersetzungseinheit ATrans ist ausgebildet, aus der ersten Adressrepräsentation, soweit sie in geeigneter Form vorliegt, eine geographische Koordinatenrepräsentation des geographischen Ortes zu ermitteln. Die geographische Koordinatenrepräsentation ist geeignet als Zielvorgabe für die Navigationseinheit Nav. Die Navigationseinheit Nav ist ausgebildet, abhängig von der aktuellen Position des Fahrzeugs und der Zielvorgabe eine geeignete Route von der aktuellen Position zu dem Ziel zu ermitteln und dem Benutzer der Vorrichtung über die Benutzerschnittstelle UI Fahranweisungen zu erteilen, die es dem Benutzer ermöglichen, das Fahrzeug zu dem Ziel zu steuern. Die geographische Koordinatenrepräsentation kann auf einem geographischen, auf einem ekliptischen oder auf einem anderen Koordinatensystem beruhen. Die geographische Koordinatenrepräsentation ist beispielsweise durch eine WGS84-Koordinate gebildet.

Die Navigationseinheit Nav kann jedoch auch ausgebildet sein, von einem Server-System die Route ermitteln zu lassen und entsprechende Fahranweisungen an den Benutzer zu erteilen oder von dem Server-System die Fahranweisungen ermitteln zu lassen und diese dem Benutzer über die Benutzerschnittstelle UI geeignet mitzuteilen. Die Vorrichtung umfasst dann vorzugsweise eine Sende-Empfangseinheit zum Kommunizieren mit dem Server-System. Die Vorrichtung kann ebenso über die Sende-Empfangseinheit mit der externen Datenbank eDB koppelbar sein. Die Sende-Empfangseinheit kann auch z.B. durch die Telefoneinheit Phone gebildet sein.

Die erste Adressrepräsentation ist beispielsweise ein Text, insbesondere ein alphanumerischer Text, mit einer vorgegebenen Struktur, die beispielsweise einer virtuellen Visitenkarte entspricht. Eine solche textbasierte, virtuelle Visitenkarte ist z.B. als VCARD bekannt. Die erste Adressrepräsentation kann jedoch auch anders strukturiert sein. Anhand der vorgegebenen Struktur kann die Adressübersetzungseinheit ATrans aus der ersten Adressrepräsentation Adresskomponenten ermitteln. Adresskomponenten sind beispielsweise ein Ortsname, ein Straßenname, oder auch ein Name einer Firma. Die erste Adressrepräsentation kann jedoch auch weitere Adresskomponenten umfassen, z.B. einen Namen einer U-Bahn-Haltestelle, einen Hotelnamen, einen Restaurantnamen, einen Namen einer Messe oder auch einen Namen einer Person, der z.B. ein Wohnort oder ein Arbeitsort zugeordnet sein kann. Die Adressübersetzungseinheit ATrans ermittelt aus den ermittelten Adresskomponenten die zugehörige geographische Koordinatenrepräsentation. Dazu kann die interne Datenbank iDB und/oder die externe Datenbank eDB und auch das Adressbuch AB genutzt werden.

Ist die erste Adressrepräsentation die gesprochene Adresse, dann wird diese vorzugsweise der ersten Adresserkennungseinheit ARec1 zugeführt, die ausgebildet ist, Sprache zu erkennen und vorzugsweise in einen Text zu überführen und Adresskomponenten zu erkennen. Ist die erste Adressrepräsentation ein Bild, z.B. von einer digitalisierten Visitenkarte, dann wird das Bild der zweiten Adresserkennungseinheit ARec2 zugeführt, die ausgebildet ist, Schrift zu erkennen und vorzugsweise in einen Text zu überführen und Adresskomponenten zu erkennen. Eine handschriftlich notierte Adresse kann in digitalisierter Form der dritten Adresserkennungseinheit ARec3 zugeführt werden, die ausgebildet ist, die Handschrift zu erkennen und in einen Text zu überführen und Adresskomponenten zu erkennen. Die zweite Adresserkennungseinheit ARec2 und die dritte Adresserkennungseinheit ARec3 sind bevorzugt ausgebildet zum Erkennen von Adressfeldern, z.B. von Briefen oder Visitenkarten.

Ferner kann die erste Adressrepräsentation auch ein Foto des geographischen Ortes sein, z.B. von einem Gebäude oder von einem Platz. Das Foto wird vorzugsweise der vierten Adresserkennungseinheit ARec4 zugeführt. Die vierte Adresserkennungseinheit ARec4 ist ausgebildet, den geographischen Ort, der auf dem Foto dargestellt ist, zu erkennen und die Adresse zu ermitteln, die diesem geographischen Ort zugeordnet ist. Zu diesem Zweck ist gegebenenfalls eine Anfrage an die interne Datenbank iDB und/oder an die externe Datenbank eDB erforderlich. Es kann jedoch ebenso z.B. ein Wohnort einer Person, die auf dem Foto dargestellt ist, oder ein anderer geographischer Ort, der mit dieser Person assoziiert ist, ermittelt werden.

Die erste Adresserkennungseinheit ARec1, die zweite Adresserkennungseinheit ARec2, die dritte Adresserkennungseinheit A-Rec3 und die vierte Adresserkennungseinheit ARec4 sind ausgebildet, die erste Adressrepräsentation in eine zweite Adressrepräsentation zu überführen, die vorzugsweise ein alphanumerischer Text ist. Die zweite Adressrepräsentation wird der Adressübersetzungseinheit ATrans zugeführt. Die Adressübersetzungseinheit ATrans ermittelt entsprechend der ersten Adressrepräsentation auch aus der zweiten Adressrepräsentation die zugehörige geographische Koordinatenrepräsentation.

Die vierte Adresserkennungseinheit ARec4 kann auch so ausgebildet sein, dass abhängig von einem Datenformat der ersten Adressrepräsentation ein geeigneter Adresserkennungsalgorithmus geladen und dann ausgeführt wird, z.B. aus der internen Datenbank iDB oder der externen Datenbank eDB. Dies hat den Vorteil, dass einfach eine große Anzahl von Datenformaten unterstützt werden kann. In der Vorrichtung brauchen dann gegebenenfalls nur wenige Adresserkennungseinheiten oder auch nur die vierte Adresserkennungseinheit ARec4 vorgesehen sein. Die Vorrichtung ist so sehr einfach erweiterbar, um weitere Adresserkennungsalgorithmen oder Datenformate unterstützen zu können.

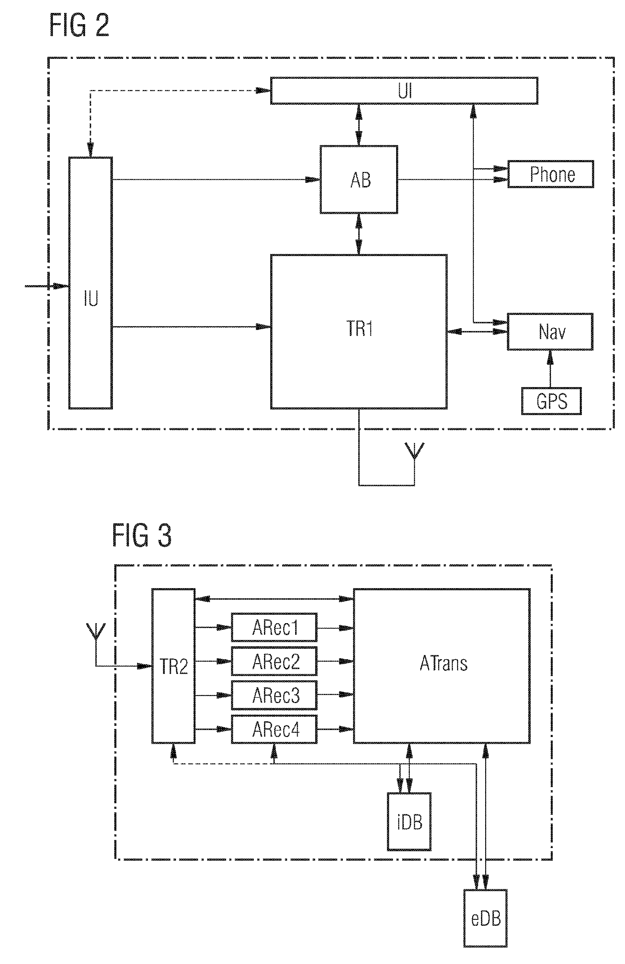

Figur 2 zeigt eine weitere Vorrichtung, die eine erste Sende-Empfangseinheit TR1 umfasst, die eingangsseitig mit der Schnittstelleneinheit IU gekoppelt ist und die ausgangsseitig mit der Navigationseinheit Nav gekoppelt ist. Die erste Sende-Empfangseinheit TR1 kann auch die Telefoneinheit Phone umfassen oder die Telefoneinheit Phone kann auch als die erste Sende-Empfangseinheit TR1 ausgebildet sein oder diese umfassen.

Die erste Adresserkennungseinheit ARec1, die zweite Adresserkennungseinheit ARec2, die dritte Adresserkennungseinheit A-Rec3 und die vierte Adresserkennungseinheit ARec4 sowie die Adressübersetzungseinheit ATrans sind ausgelagert auf das Server-System (Figur 3). Ferner kann auch die mindestens eine interne Datenbank iDB auf das Server-System ausgelagert sein. Ferner kann das Server-System mit der mindestens einen externen Datenbank eDB koppelbar sein.

Das Server-System weist eine zweite Sende-Empfangseinheit TR2 auf. Das Server-System ist vorzugsweise so ausgebildet, dass mehr als eine Vorrichtung mit dem Server-System kommunizieren kann, insbesondere unabhängig voneinander und auch gleichzeitig. Das Server-System kann auch mehr als eine Sende-Empfangseinheit TR2 umfassen, die gegebenenfalls auf verschiedene Standorte verteilt angeordnet sind. Bevorzugt sind die erste Sende-Empfangseinheit TR1 und die zweite Sende-Empfangseinheit TR2 über eine Funkverbindung miteinander koppelbar. Das Server-System kann auch z.B. mit dem Internet oder mit einem anderen Netzwerk, z.B. einem Telefonnetz oder einem Mobilfunknetz gekoppelt sein.

Die Vorrichtung ist vorzugsweise so ausgebildet, dass die erste Adressrepräsentation über die erste Sende-Empfangseinheit TR1 an die zweite Sende-Empfangseinheit TR2 gesendet wird. Das Server-System ermittelt aus der ersten Adressrepräsentation die geographische Koordinatenrepräsentation, die Route zu dem vorgegebenen Ziel oder entsprechende Fahranweisungen, um das Fahrzeug zu dem vorgegebenen Ziel zu steuern. Die geographische Koordinatenrepräsentation, die Route bzw. die Fahranweisungen können dann mittels der zweiten Sende-Empfangseinheit TR2 an die erste Sende-Empfangseinheit TR1 gesendet werden und in der Vorrichtung z.B. der Navigationseinheit Nav zugeführt werden.

Es ist ebenso möglich, nur die erste Adresserkennungseinheit ARec1, die zweite Adresserkennungseinheit ARec2, die dritte Adresserkennungseinheit ARec3 und/oder die vierte Adresserkennungseinheit ARec4 in das Server-System auszulagern oder nur die Adressübersetzungseinheit ATrans in das Server-System auszulagern oder nur die mindestens eine interne Datenbank iDB oder die mindestens eine externe Datenbank eDB in das Server-System auszulagern. Ebenso kann auch nur das Ermitteln der Route oder der Fahranweisungen aus der Vorrichtung ausgelagert sein. Das Server-System kann auch als die externe Datenbank eDB für die Vorrichtung ausgebildet sein.

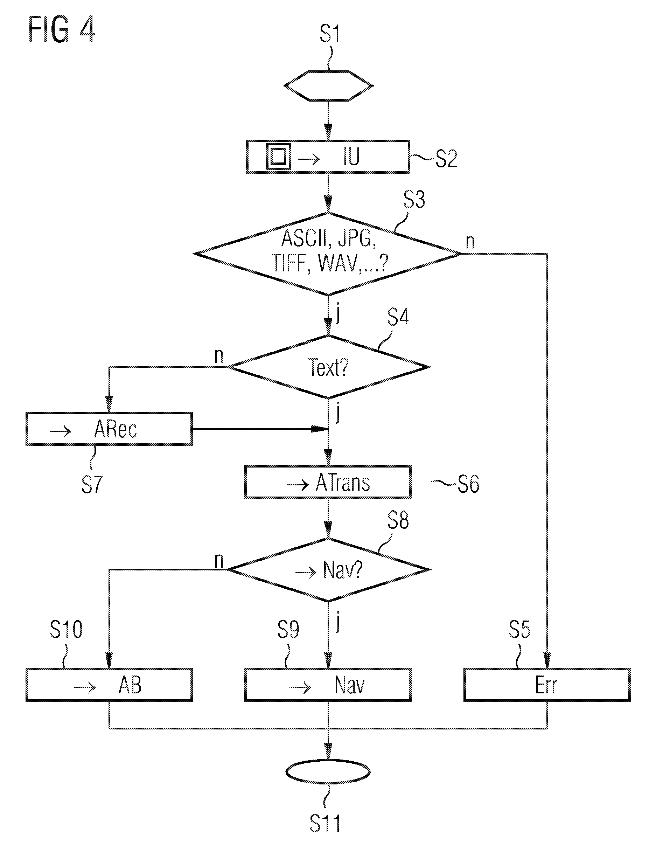

Figur 4 zeigt ein Ablaufdiagramm eines Verfahrens, das durch die Vorrichtung ausgeführt wird. Das Verfahren beginnt in einem Schritt S1. In einem Schritt S2 wird die erste Adressrepräsentation der Vorrichtung, insbesondere der Schnittstelleneinheit IU, zugeführt. In einem Schritt S3 wird überprüft, ob die erste Adressrepräsentation in einem zulässigen Datenformat vorliegt, also in einem Datenformat, das von der Adressübersetzungseinheit ATrans oder einer der Adresserkennungseinheiten verarbeitet werden kann. Ist diese Bedingung erfüllt, dann wird das Verfahren in einem Schritt S4 fortgesetzt. Ist die Bedingung jedoch nicht erfüllt, dann wird mittels der Benutzerschnittstelle UI in einem Schritt S5 eine Fehlermeldung ausgegeben und das Verfahren in einem Schritt S11 beendet.

In dem Schritt S4 wird überprüft, ob die erste Adressrepräsentation ein alphanumerischer Text ist. Ist die Bedingung erfüllt, dann wird in einem Schritt S6 die erste Adressrepräsentation in der Adressübersetzungseinheit ATrans in die zugehörige geographische Koordinatenrepräsentation übersetzt. Ist die erste Adressrepräsentation in dem Schritt S4 jedoch kein alphanumerischer Text, dann wird die erste Adressrepräsentation in einem Schritt S7 mindestens einer der Adresserkennungseinheiten zugeführt. Die erkannte und in den alphanumerischen Text überführte Adresse wird dann in dem Schritt S6 als zweite Adressrepräsentation der Adressübersetzungseinheit ATrans zugeführt.

In einem Schritt S8 wird überprüft, ob die geographische Koordinatenrepräsentation als Zielvorgabe in der Navigationseinheit Nav genutzt werden soll. Ist diese Bedingung erfüllt, dann wird in einem Schritt S9 die geographische Koordinatenrepräsentation der Navigationseinheit Nav zugeführt. Andernfalls kann die geographische Koordinatenrepräsentation in einem Schritt S10 jedoch auch in dem Adressbuch AB gespeichert werden. Das Verfahren endet in dem Schritt S11.

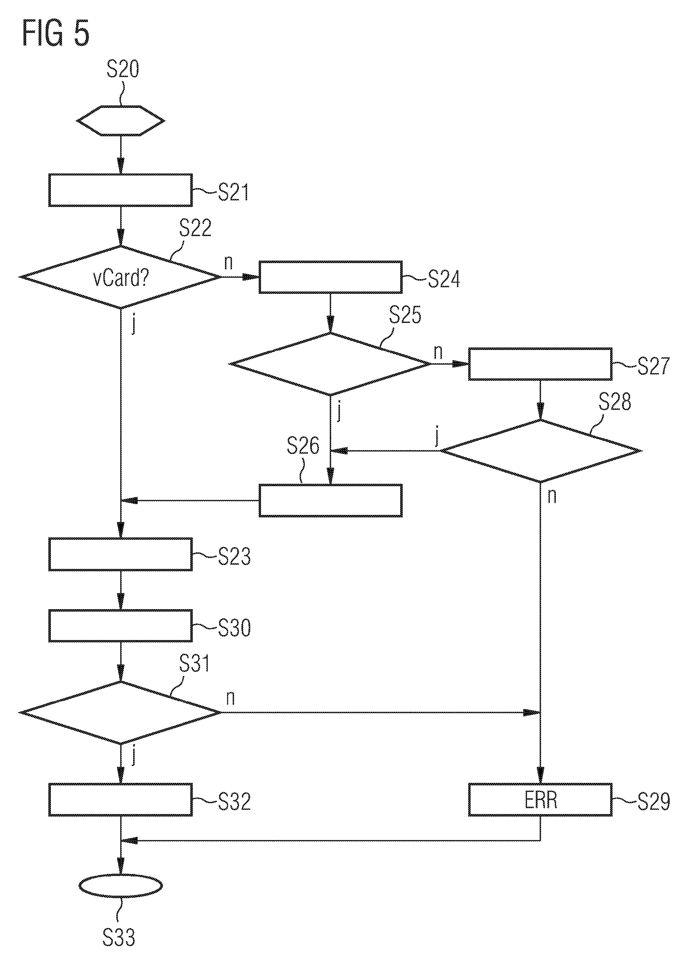

Figur 5 zeigt ein zweites Ablaufdiagramm eines Verfahrens zum Ermitteln und Verarbeiten von Adresskomponenten der ersten oder der zweiten Adressrepräsentation. Das Verfahren beginnt in einem Schritt S20. In einem Schritt S21 wird der alphanumerische Text gelesen, der durch die erste Adressrepräsentation, z.B. durch die textbasierte virtuelle Visitenkarte, oder durch die zweite Adressrepräsentation gegeben ist.

In einem Schritt S22 wird überprüft, ob die Adresse in einem strukturierten Textformat, z.B. als VCARD, vorliegt. Ist diese Bedingung erfüllt, dann wird das Verfahren in einem Schritt S23 fortgesetzt. Ist die Bedingung jedoch nicht erfüllt, dann wird in einem Schritt S24 nach typischen Bezeichnern von Adresskomponenten gesucht. Solche typischen Bezeichner sind z.B. Straße, Ort, Postleitzahl oder PLZ. In einem Schritt S25 wird überprüft, ob solche Bezeichner gefunden wurden. Ist diese Bedingung erfüllt, dann werden in einem Schritt S26 die Adresskomponenten anhand der Bezeichner erkannt. Das Verfahren kann dann in dem Schritt S23 fortgesetzt werden. Wurden in dem Schritt S25 jedoch keine Bezeichner gefunden, dann wird in einem Schritt S27 nach typischen Orts- oder Straßennamen oder Ziffernfolgen, z.B. von Postleitzahlen oder Hausnummern, gesucht. Insbesondere kann z.B. auch nach typischen Endungen von Ortsnamen oder nach Abkürzungen gesucht werden, um die Adresskomponenten ermitteln zu können. Typische Abkürzungen sind z.B. "Str" für "Straße" und "P1" für "Platz".

In einem Schritt S28 wird dann überprüft, ob typische Orts- oder Straßennamen, Ziffernfolgen oder Abkürzungen ermittelt werden konnten. Ist diese Bedingung erfüllt, dann können in dem Schritt S26 die Adresskomponenten ermittelt werden. Ist die Bedingung jedoch nicht erfüllt, dann wird in einem Schritt S29 eine Fehlermeldung erzeugt und das Verfahren in einem Schritt S33 beendet.

Nachdem die Adresskomponenten ermittelt worden sind, werden in dem Schritt S23 die Adresskomponenten auf Fehler überprüft, z.B. auf typische Tipp- oder Schreibfehler oder auf Erkennungsfehler. Erkannte Fehler werden dann gegebenenfalls automatisch korrigiert. In einem Schritt S30 werden typische Abkürzungen aufgelöst, also z.B. "Str" durch "Straße" ersetzt. In einem Schritt S31 wird dann überprüft, ob alle Adresskomponenten, die zum Ermitteln der geographischen Koordinatenrepräsentation erforderlich sind, gegeben sind. Beispielsweise genügt ein Straßenname alleine üblicherweise nicht, um die geographische Koordinatenrepräsentation ermitteln zu können. Der Straßenname in Kombination mit dem Ortsnamen oder der Straßenname in Kombination mit der Postleitzahl können jedoch eine übersetzbare Adresse bilden. Liegt eine übersetzbare Adresse vor, dann wird diese in einem Schritt S32 für die Adressübersetzung in die geographische Koordinatenrepräsentation zur Verfügung gestellt und das Verfahren in dem Schritt S33 beendet. Liegt jedoch keine übersetzbare Adresse vor, dann wird in dem Schritt S29 die Fehlermeldung erzeugt und das Verfahren in dem Schritt S33 beendet.

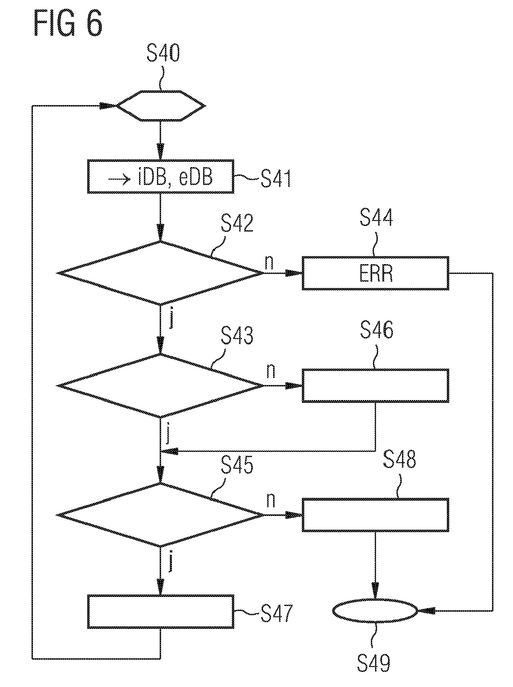

Figur 6 zeigt ein Ablaufdiagramm eines Verfahrens zum Übersetzen der Adresse in die geographische Koordinatenrepräsentation des geographischen Ortes. Das Verfahren beginnt in einem Schritt S40, der sich vorzugsweise an den Schritt S32 anschließt. In einem Schritt S41 wird eine Adresskomponente, z.B. der Ortsname, mit der internen Datenbank iDB und/oder der externen Datenbank eDB abgeglichen. In einem Schritt S42 wird überprüft, ob die Adresskomponente gefunden wurde. Ist diese Bedingung erfüllt, dann wird das Verfahren in einem Schritt S43 fortgesetzt. Ist die Bedingung jedoch nicht erfüllt, dann wird in einem Schritt S44 die Fehlermeldung erzeugt und das Verfahren in einem Schritt S49 beendet.

In dem Schritt S43 wird überprüft, ob die jeweilige Adresskomponente eindeutig ist. Beispielsweise können mehrere Orte existieren, die den gleichen Ortsnamen aufweisen, z.B. Frankfurt, also entweder Frankfurt an der Oder oder Frankfurt am Main, oder Wetter, also entweder Wetter an der Ruhr oder Wetter im Kreis Marburg. Die jeweilige Adresskomponente kann jedoch auch durch einen Schreibfehler, der nicht automatisch korrigiert werden konnte, mehrdeutig sein. Ist die Adresskomponente eindeutig, dann wird das Verfahren in einem Schritt S45 fortgesetzt. Ist die Adresskomponente jedoch nicht eindeutig, dann wird in einem Schritt S46 dem Benutzer eine Auswahlliste zur Verfügung gestellt, aus der die gewünschte eindeutige Adresskomponente auswählbar ist. In der Auswahlliste sind vorzugsweise nur die eindeutigen Adresskomponenten aufgelistet, die eine hohe Übereinstimmung mit der mehrdeutigen Adresskomponente aufweisen. Das Verfahren wird dann ebenfalls in dem Schritt S45 fortgesetzt. Gegebenenfalls kann jedoch Eindeutigkeit von Adresskomponenten auch dadurch hergestellt werden, dass mehrere Adresskomponenten, z.B. der Ortsname und die Postleitzahl oder der Straßenname und der Ortsname, miteinander verknüpft werden. Der Straßenname existiert beispielsweise nur für einen der möglichen Orte.

In dem Schritt S45 wird überprüft, ob weitere Adresskomponenten vorhanden oder erforderlich sind, um die geographische Koordinatenrepräsentation eindeutig ermitteln zu können, z.B. die Hausnummer, die insbesondere bei langen Straßen von Nutzen sein kann. Ist diese Bedingung erfüllt, dann wird in einem Schritt S47 eine weitere Adresskomponente gewählt und in dem Schritt S41 erneut mit der Datenbank abgeglichen. Andernfalls wird in einem Schritt S48 die geographische Koordinatenrepräsentation ermittelt und das Verfahren in dem Schritt S49 beendet.

Die ermittelte geographische Koordinatenrepräsentation kann zusammen mit der ersten oder der zweiten Adressrepräsentation beziehungsweise mit den korrigierten und eindeutigen Adresskomponenten in der internen Datenbank iDB, insbesondere in dem Adressbuch AB, oder auch in der externen Datenbank eDB gespeichert werden, so dass die erste Adressrepräsentation nur einmal in die Koordinatenrepräsentation übersetzt werden muss und die geographische Koordinatenrepräsentation für eine spätere Nutzung verfügbar ist. Es ist ebenso möglich, die korrigierten und eindeutigen Adresskomponenten beispielsweise dem Mobiltelefon oder dem persönlichen digitalen Assistenten zuzuführen, um dort fehlerhafte Adresskomponenten zu ersetzen.

Die erste Adressrepräsentation kann insbesondere auch Orte von besonderem Interesse, sogenannte Points of Interest, repräsentieren. Beispielsweise kann aus einem Eintrag in einem Terminkalender, z.B. "Buchmesse Frankfurt" oder "Frankfurter Buchmesse", per Datenbankabfrage die eindeutige geographische Koordinatenrepräsentation ermittelt werden, ohne dass vollständige Angaben zu Ort, Straße, Postleitzahl und Hausnummer angegeben sein müssen. Diese Vereinfachung kann beispielsweise auch genutzt werden, um ein Hotel, ein Restaurant, die U-Bahn-Haltestelle oder ein Firmengebäude als Navigationsziel vorzugeben. Insbesondere kann abhängig von der aktuellen Position des Fahrzeugs z.B. das nächstliegende Hotel oder Restaurant als Navigationsziel vorgegeben werden. Der Benutzer muss nur dann eingreifen, wenn Angaben unvollständig und nicht auflösbar oder mehrdeutig sind. Durch das Verknüpfen mehrerer Datenbanken, die z.B. als externe Datenbank eDB über eine Funkverbindung, z.B. mittels Mobilfunk, über das Internet abgefragt werden können, sind gegebenenfalls auch geographische Koordinatenrepräsentationen ermittelbar, für die in der internen Datenbank iDB keine Informationen vorhanden sind oder für die vorhandene Informationen in der internen Datenbank iDB veraltet sind. Beispielsweise können Suchmaschinen, die z.B. über das Internet abfragbar sind, für Messen, Hotels, Restaurants oder andere Points of Interest oder für andere geographische Orte genutzt werden, die jeweils die geographische Koordinatenrepräsentation zu dem gesuchten geographischen Ort ermitteln können.

Die interne Datenbank iDB und/oder die externe Datenbank eDB können erweiterbar ausgebildet sein. Beispielsweise kann die aktuelle Position, die mittels der Positionsermittlungseinheit GPS ermittelt wird, auf Wunsch mit Adresskomponenten versehen werden und in der internen Datenbank iDB, in der externen Datenbank eDB oder in dem Adressbuch AB gespeichert werden.

Das Erkennen von Adressfeldern und von Adresskomponenten, das Ersetzen von Abkürzungen und gegebenenfalls das Korrigieren von Schreibfehlern und das Bilden von Kombinationen von Adresskomponenten, die zusammen die übersetzbare Adresse bilden, sind vorzugsweise länder- und sprachspezifisch ausgebildet, da das Adressformat oder die Schreibweise von z.B. Ortsnamen unterschiedlich sein können.

## Patentansprüche

1. Vorrichtung, die ausgebildet ist zum Navigieren eines Fahrzeugs zu einem vorgebbaren Ziel und die so ausgebildet ist, dass das vorgebbare Ziel mittels einer ersten Adressrepräsentation eines geographischen Ortes vorgebbar ist und die umfasst
- mindestens eine Schnittstelleneinheit (IU), der eingangsseitig die erste Adressrepräsentation zuführbar ist,
- mindestens eine Adresserkennungseinheit, die ausgebildet ist, eine zweite Adressrepräsentation aus der ersten Adressrepräsentation zu ermitteln,
- eine Adressübersetzungseinheit (ATrans), die ausgebildet ist, die zweite Adressrepräsentation in eine geographische Koordinatenrepräsentation zu übersetzen,
- eine Navigationseinheit (Nav), die ausgebildet ist, abhängig von der geographischen Koordinatenrepräsentation eine Zielführung zu dem vorgegebenen Ziel durchzuführen.

2. Vorrichtung, die ausgebildet ist zum Navigieren eines Fahrzeugs zu einem vorgebbaren Ziel und die so ausgebildet ist, dass das vorgebbare Ziel mittels einer ersten Adressrepräsentation eines geographischen Ortes vorgebbar ist und die umfasst
- mindestens eine Schnittstelleneinheit (IU), der eingangsseitig die erste Adressrepräsentation zuführbar ist,
- mindestens eine Adresserkennungseinheit, die ausgebildet ist, eine zweite Adressrepräsentation aus der ersten Adressrepräsentation zu ermitteln,
- eine erste Sende-Empfangseinheit (TR1), die ausgebildet ist, die zweite Adressrepräsentation an ein Server-System zu senden und von diesem eine geographische Koordinatenrepräsentation des geographischen Ortes oder eine Route zu dem vorgegebenen Ziel oder entsprechende Fahranweisungen zu empfangen, und
- eine Navigationseinheit (Nav), die ausgebildet ist, abhängig von der geographischen Koordinatenrepräsentation, der Route bzw. den Fahranweisungen eine Zielführung zu dem vorgegebenen Ziel durchzuführen.

3. Vorrichtung nach einem der vorstehenden Ansprüche, bei der die erste Adressrepräsentation eine gesprochene Adresse ist und bei der mindestens eine Adresserkennungseinheit ausgebildet ist zum Erkennen von Sprache.

4. Vorrichtung nach einem der vorstehenden Ansprüche, bei der die erste Adressrepräsentation ein Bild einer geschriebenen Adresse ist und bei der mindestens eine Adresserkennungseinheit ausgebildet ist zum Erkennen von Schrift.

5. Vorrichtung nach einem der vorstehenden Ansprüche, bei der die erste Adressrepräsentation ein Bild eines geographischen Ortes ist und bei der mindestens eine Adresserkennungseinheit ausgebildet ist zum Erkennen des in dem Bild dargestellten geographischen Ortes.

6. Vorrichtung, die ausgebildet ist zum Navigieren eines Fahrzeugs zu einem vorgebbaren Ziel und die so ausgebildet ist, dass das vorgebbare Ziel mittels einer ersten Adressrepräsentation eines geographischen Ortes vorgebbar ist und die umfasst
- mindestens eine Schnittstelleneinheit (IU), der eingangsseitig die erste Adressrepräsentation zuführbar ist,
- eine erste Sende-Empfangseinheit (TR1), die ausgebildet ist, die erste Adressrepräsentation an ein Server-System zu senden und von diesem eine zweite Adressrepräsentation zu empfangen,
- eine Adressübersetzungseinheit (ATrans), die ausgebildet ist, die zweite Adressrepräsentation in eine geographische Koordinatenrepräsentation zu übersetzen, und
- eine Navigationseinheit (Nav), die ausgebildet ist, abhängig von der geographischen Koordinatenrepräsentation eine Zielführung zu dem vorgegebenen Ziel durchzuführen.

7. Vorrichtung nach einem der vorstehenden Ansprüche, bei der die mindestens eine Adresserkennungseinheit oder die Adressübersetzungseinheit (ATrans) ausgebildet ist zum Ermitteln von Adresskomponenten der ersten bzw. der zweiten Adressrepräsentation und zum Erkennen und/oder zum Korrigieren von Fehlern der Adresskomponenten.

8. Vorrichtung nach Anspruch 7, bei der die mindestens eine Adresserkennungseinheit oder die Adressübersetzungseinheit (ATrans) ausgebildet ist zum Überprüfen auf Eindeutigkeit der Adresskomponenten und zum Bereitstellen mindestens einer Auswahlliste von ähnlichen, jeweils eindeutigen Adresskomponenten, aus der für einen Benutzer eine gewünschte Adresskomponente auswählbar ist, wenn die jeweilige Adresskomponente nicht eindeutig ist.

9. Vorrichtung, die ausgebildet ist zum Navigieren eines Fahrzeugs zu einem vorgebbaren Ziel und die so ausgebildet ist, dass das vorgebbare Ziel mittels einer ersten Adressrepräsentation eines geographischen Ortes vorgebbar ist und die umfasst
- mindestens eine Schnittstelleneinheit (IU), der eingangsseitig die erste Adressrepräsentation zuführbar ist,
- eine erste Sende-Empfangseinheit (TR1), die ausgebildet ist, die erste Adressrepräsentation an ein Server-System zu senden und von diesem eine geographische Koordinatenrepräsentation des geographischen Ortes oder eine Route zu dem vorgegebenen Ziel oder entsprechende Fahranweisungen zu empfangen, und
- eine Navigationseinheit (Nav), die ausgebildet ist, abhängig von der geographischen Koordinatenrepräsentation, der Route bzw. den Fahranweisungen eine Zielführung zu dem vorgegebenen Ziel durchzuführen.

10. Vorrichtung nach einem der vorstehenden Ansprüche, bei der die erste Adressrepräsentation und/oder die zweite Adressrepräsentation ein Text ist.

11. Vorrichtung nach einem der vorstehenden Ansprüche, die mindestens eine interne Datenbank (iDB) umfasst oder die mit mindestens einer externen Datenbank (eDB) koppelbar ist und die ausgebildet ist, die zweite Adressrepräsentation und/oder die geographische Koordinatenrepräsentation mittels Anfragen an die mindestens eine interne Datenbank (iDB) und/oder an die mindestens eine externe Datenbank (eDB) zu ermitteln.

12. Vorrichtung nach Anspruch 11, die eine Positionsermittlungseinheit (GPS) umfasst zum Ermitteln einer aktuellen Position und bei der die aktuelle Position als geographische Koordinatenrepräsentation in der internen Datenbank (iDB) und/oder in der externen Datenbank (eDB) speicherbar ist zusammen mit einer Adresse oder einer Bezeichnung des zugehörigen geographischen Ortes.

13. Server-System, das umfasst
- eine zweite Sende-Empfangseinheit (TR2), die ausgebildet ist, eine erste Adressrepräsentation zu empfangen,
- mindestens eine Adresserkennungseinheit, die ausgebildet ist, eine zweite Adressrepräsentation aus der ersten Adressrepräsentation zu ermitteln,
- eine Adressübersetzungseinheit (ATrans), die ausgebildet ist, die zweite Adressrepräsentation in eine geographische Koordinatenrepräsentation oder eine Route zu dem vorgegebenen Ziel oder entsprechende Fahranweisungen zu übersetzen,
und das ausgebildet ist, die geographische Koordinatenrepräsentation, die Route bzw. die Fahranweisungen über die zweite Sende-Empfangseinheit (TR2) zu senden.

14. Server-System, das umfasst
- eine zweite Sende-Empfangseinheit (TR2), die ausgebildet ist, eine erste Adressrepräsentation zu empfangen,
- mindestens eine Adresserkennungseinheit, die ausgebildet ist, eine zweite Adressrepräsentation aus der ersten Adressrepräsentation zu ermitteln,
und das ausgebildet ist, die zweite Adressrepräsentation über die zweite Sende-Empfangseinheit (TR2) zu senden.

15. Server-System nach einem der Ansprüche 13 oder 14, bei dem die erste Adressrepräsentation eine gesprochene Adresse ist und bei dem mindestens eine Adresserkennungseinheit ausgebildet ist zum Erkennen von Sprache.

16. Server-System nach einem der Ansprüche 13 bis 15, bei dem die erste Adressrepräsentation ein Bild einer geschriebenen Adresse ist und bei dem mindestens eine Adresserkennungseinheit ausgebildet ist zum Erkennen von Schrift.

17. Server-System nach einem der Ansprüche 13 bis 16, bei dem die erste Adressrepräsentation ein Bild eines geographischen Ortes ist und bei dem mindestens eine Adresserkennungseinheit ausgebildet ist zum Erkennen des in dem Bild dargestellten geographischen Ortes.

18. Server-System nach einem der Ansprüche 13 bis 17, bei dem die mindestens eine Adresserkennungseinheit oder die Adressübersetzungseinheit (ATrans) ausgebildet ist zum Ermitteln von Adresskomponenten der ersten bzw. der zweiten Adressrepräsentation und zum Erkennen und/oder zum Korrigieren von Fehlern der Adresskomponenten.

19. Server-System nach Anspruch 18, bei dem die mindestens eine Adresserkennungseinheit oder die Adressübersetzungseinheit (ATrans) ausgebildet ist zum Überprüfen auf Eindeutigkeit der Adresskomponenten und zum Bereitstellen mindestens einer Auswahlliste von ähnlichen, jeweils eindeutigen Adresskomponenten, aus der für einen Benutzer eine gewünschte Adresskomponente auswählbar ist, wenn die jeweilige Adresskomponente nicht eindeutig ist.

20. Server-System nach einem der Ansprüche 13 bis 19, bei der die erste Adressrepräsentation und/oder die zweite Adressrepräsentation ein Text ist.
